# EUROPÄISCHE PATENTSCHRIFT

(11) **EP 1 150 821 B1**
(45) Veröffentlichungstag und Bekanntmachung des Hinweises auf die Patenterteilung: **11.12.2002**
(21) Anmeldenummer: 00901468.9
(22) Anmeldetag: 09.02.2000
(51) Int. Cl.: B29C 45/17, B29C 45/66

(54) **FORMSCHLIESSEINHEIT**
MOLD CLOSING UNIT
UNITE DE FERMETURE DE MOULE

(30) Priorität: 10.02.1999 CH 24999
(43) Veröffentlichungstag der Anmeldung: 07.11.2001
(73) Patentinhaber: Netstal-Maschinen AG, 8752 Näfels (CH)
(72) Erfinder: WEINMANN, Robert, CH-8872 Weesen (CH); STILLHARD, Bruno, CH-9011 St. Gallen (CH); KEITEL, Ralph, F-68600 Algolsheim (FR)
(74) Vertreter: Ackermann, Ernst, Dipl.-Ing. HTL
(86) Internationale Anmeldenummer: CH0000069
(87) Internationale Veröffentlichungsnummer: WO00047389

(56) Entgegenhaltungen:
- EP-A- 0 213 211
- EP-A- 0 366 810
- DE-B- 1 227 642
- DE-U- 9 312 232
- PATENT ABSTRACTS OF JAPAN vol. 1998, no. 1, 30. Januar 1998 (1998-01-30) & JP 09 225980 A (NIIGATA ENG CO LTD), 2. September 1997 (1997-09-02)
- PATENT ABSTRACTS OF JAPAN vol. 13, no. 593 (M-914), 27. Dezember 1989 (1989-12-27) & JP 01 249410 A (MEIKI CO LTD), 4. Oktober 1989 (1989-10-04)

## Beschreibung

### Technisches Gebiet

Die Erfindung betrifft eine Formschliesseinheit für eine Spritzgiessmaschine mit einem kurzen Arbeitshub sowie einem längeren Wartungshub, insbesondere für die Herstellung von scheibenförmigen Teilen.

### Stand der Technik

Beim Spritzgiessen von flachen Teilen, z.B. Compact Discs, möchte man den Öffnungshub für den Produktionszyklus der Spritzgiessmaschine nur so gross halten, wie für das Entformen notwendig ist. Solche Compact Discs haben eine Dicke von einigen Millimetern. Theoretisch würde also schon eine Öffnungsbewegung von etwas über 1 cm genügen. Neuere Tendenzen streben tatsächlich Kurzhübe von 30 bis 50 mm an, um die sogenannte Trockenlaufzeit möglichst tief zu halten. Beim Formwechsel muss es hingegen möglich sein, die Öffnungsweite bis ca. 300 mm relativ schnell zu vergrössern. Dieser Vorgang wird als Wartungshub bezeichnet.

Die heute kurz als CD bezeichneten Datenträger haben in der ganzen Wirtschaft und auch im privaten Bereich eine nicht mehr wegzudenkende Schlüsselposition. Die digitalisierte Speicherung von Daten, Tönen und Bildern setzt völlig neue Massstäbe. Bekannt sind bereits CD's mit sehr hoher Datendichte, ferner neue Mehrschicht-Technologien mit bis zu zwei Informations-Schichten. MO (magnetisch-optisch), CD-R (einfach beschreibbar, Photo, Computerdaten, Musik-/Videoaufnahmen), CD-RW (mehrfach beschreibbar, Computerdaten und Musikaufnahmen, Video-Sequenzen), CD-Audio sowie CD-ROM. Die ständig zunehmende Datenmenge und die damit einhergehende Datenverdichtung, aber auch die gleichzeitig entwickelten Daten-Speichertechnologien verlangen immer hochpräzisere, reproduzierbare und langzeitstabile Formgebungsprozesse. Dies stellt maximale Anforderungen an die Regelgenauigkeit von Geschwindigkeiten, Drücken, Kräften und Temperaturen für die spritztechnische Herstellung der Trägerplatten. Die Konstanz, vor allem der aufgezählten verfahrenstechnischen Parameter, bestimmt die Qualität der Discs und beeinflusst entscheidend die Wirtschaftlichkeit des Gesamtsystems der Herstellanlagen. Eine moderne Produktionsstätte für die Serienproduktion von CD's umfasst mehrere Produktionseinheiten, wobei eine grössere Einheit eine Produktivität von bis zu zehntausenden Discs in 24 Stunden erreichen kann. Entscheidend für den Erfolg sind nicht nur höchste Anforderungen an das Giesssystem als solches. Es bedingt vor allem auch ein feines Zusammenspiel der wichtigsten Subsysteme in Bezug auf alle Funktionen und Qualitätsmerkmale, in erster Linie der Maschine, der Werkzeuge sowie des Handlings, wie Entnahmevorrichtung, Abtransport, usw. Gefordert ist höchste Reproduzierbarkeit, massgenaue Pit-Ausformung und ausgezeichnete Langzeit-Prozessstabilität bei kürzesten Zykluszeiten. Eine grössere Fabrik verfügt nicht selten über eigene Aufnahmestudios, eine moderne Mastering-Infrastruktur und mehrere Replikationslinien und produziert z.B. 60 Mio. Optical Discs im Jahr oder 220'000 Discs pro Tag.

Die aufgezeigten enormen Produktionszahlen in nur einer Fabrik bedingen eine besondere Spezialität. Vom Markt werden zwar CD's mit einer Vielfalt in Bezug auf den Grundaufbau verlangt, jedoch eine unbeschränkte Variation in Bezug auf die speziell aufzuprägenden Daten. Die einzelnen Serien sind in der Regel klein, können jedoch in die tausende oder zehntausende gehen. Die Folge ist ein für Spritzgiessmaschinen unüblich rascher Wechsel der Formeinsätze. Unter Umständen ist eine Form, bzw. der entsprechenden Stamper nur eine viertel oder eine halbe Stunde in der Maschine und muss durch eine andere ersetzt werden. Die Wirtschaftlichkeit liegt neben einer fehlerfreien Produktion vor allem in zwei fast gleichgewichtigen Faktoren:
1. Zykluszeit für eine CD inkl. die dafür erforderliche Trockenlaufzeit
2. Umrüstzeit für den Einsatz der Matrize (Stamper) in die Grundform zum Wechsel der Information

Die Umrüstzeit geht bei den üblicherweise kleinen Serien stark in die Produktivität ein, da die Stamper stündlich oft mehrmals gewechselt werden müssen. Die extremen Anforderungen, wie dargestellt, werden heute mit vollhydraulischen Spritzgiessmaschinen mit sehr grossem Erfolg erfüllt. Für die CD-Herstellung werden anstelle der klassischen Negativform sogenannte Stamper verwendet. Stamper sind aus Distanz betrachtet eine Art dünne CD-Platten, welche als Negativform das Abbild von der Oberflächenstruktur der CD aufweisen. Gewechselt wird somit nur die Stamperplatte, welche in die Form einlegbar und z.B. in einer halben Minute wieder herausnehmbar ist. Es ist bekannt, dass elektromechanische Spritzgiessmaschinen eine bessere Ausnützung der Antriebsenergie als Vorteil gegenüber hydraulischen Antrieben besitzen und teils sogar eine höhere Präzision für die Teileherstellung zulassen. Ein weiterer Vorteil der elektrischen Antriebe liegt neben der Geräuscharmut darin, dass keine Oelhydraulik mit bekanntlich hohen Drücken verwendet wird, so dass jegliches Risiko der Verschmutzung durch Oelaustritt vermieden ist. Elektromechanisch betriebene Spritzgiessmaschinen sind für die Erzeugung der Schliesskraft auf kraftübersetzende Systeme wie: Kugelspindel, Zahnstangen, Hebelsysteme usw. angewiesen, welche, wie z.B. ein Doppel-Kniehebel, die Kraft am Kreuz- oder Gelenkkopf mit einem Faktor von z.B. 24 bis 50 verstärkt, um die Schliesskraft zu erzeugen. Heutige elektromechanische Spritzgiesmaschinen mit Kniehebelsystem sind jedoch nicht geeignet für kurze Arbeitshübe, weil dann die Schmierung der Gelenkbolzen nicht mehr gewährleistet ist. Beim Arbeiten mit vollhydraulisch betriebenen Spritzgiessmaschinen dagegen entsprechen Hubwege von 70 mm dem **Stand der Technik.**

### Darstellung der Erfindung

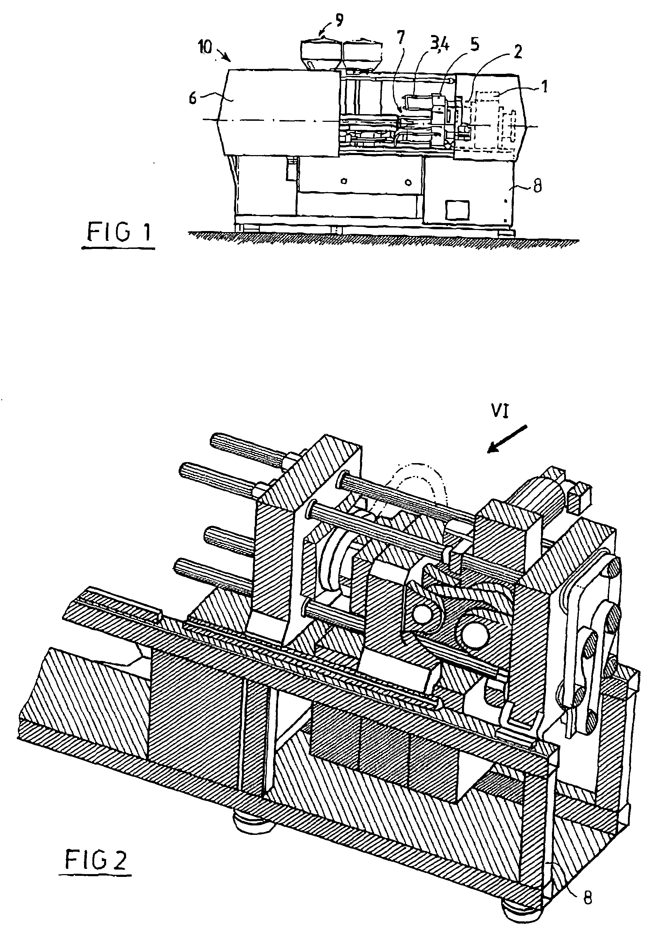

Der Erfindung wurde ausgehend von der Figur 1 als Stand der Technik der Anmelderin die Aufgabe gestellt, eine Kombination für Kurzhub-Langhub zu entwickeln, welche die höchst mögliche Produktivität und Qualität sowie die kleinstmögliche Trockenlaufzeit für die Herstellung von flachen Teilen erlaubt. Ziel war ferner die Entwicklung einer Maschine in möglichst kompakter Bauweise mit der Nutzung von 1, 2 oder mehr Kavitäten, insbesondere auch für einen Reinraumeinsatz.

Die erfindungsgemässe Lösung ist dadurch gekennzeichnet, dass sie eine Antriebsträgerplatte mit wenigstens einer elektromotorischen Servoachse aufweist, wobei die Antriebsträgerplatte ortsfest, endseitig mit dem Maschinenständer der Spritzgiessmaschine verbindbar, oder relativ zu der düsenseitigen Werkzeugaufspannplatte bewegbar ist.

Von den Erfindern ist erkannt worden, dass ein optimaler Einsatz für elektromechanische Antriebsmittel, besonders auch im Hinblick auf eine Reinraumtauglichkeit vor allem dann gewährleistet werden kann, wenn diese von einer Antriebsträgerplatte aus örtlich definiert werden, dies anstelle einer Aufteilung der Antriebsmittel auf zwei Trägerplatten, wie dies zur Zeit bei der erfolgreichsten hydraulischen CD-Maschine der Fall ist.

Die neue Lösung eröffnet ganz neue Ausgestaltungen, sowohl für den Kurz- oder Arbeitshub wie für den Lang- bzw. Wartungshub. Eine erste Ausgestaltung ist dadurch gekennzeichnet, dass sie für den Kurzhub ein elektromotorisches Kurbelgetriebe mit vorzugsweise einem Servomotor aufweist, über welchen eine bewegliche Werkzeugaufspannplatte für den Arbeitshub schnell geöffnet und schliessbar ist. Das Kurbelgetriebe weist eine Exzenterwelle sowie vorzugsweise zwei parallel angeordnete Kurbelhebel auf, welche von einem Synchron- oder AsynchronMotor antreibbar sind und symmetrisch an der beweglichen Formplatte angreifen. Die bewegliche Werkzeugaufspannplatte und das Kurbelgetriebe bilden auf diese Weise eine kompakte Baugruppe und sind auf der Antriebsträgerplatte verankert, wobei die bewegliche Werkzeugaufspannplatte auf einer Führung geführt ist. Der enorme Vorteil, der sich aus einer kompakten Baugruppe, bestehend aus der beweglichen Werkzeugaufspannplatte und dem Kurbelgetriebe ergibt, ist zuallererst in der Herstellung einer ganzen Maschine. Die Baugruppe gestattet eine ökonomische Baugruppenmontage. Sind alle Elemente innerhalb einer Baugruppe in höchster Präzision, hergestellt und eingepasst, ergibt sich trotz sehr kurzer Montagezeit eine höchste Präzision, auch für die Gesamtfunktion, da sich diese auf die innere Präzision der Baugruppe abstützen kann. Der Kurbeltrieb kann über eine Exzenterwelle optimal in der Kurbelfunktion als reine Stossfunktion bei der maximal erforderlichen Schliesskraft ausgenutzt und im entsprechenden Totlagenbereich der Kurbel zur hundertprozentigen Entlastung der davorliegenden Antriebsmittel bzw. deren Lager genutzt werden. Die grösstmöglichen Kräfte von Seiten der Formschliessung reduzieren sich in rein statische Abstützkräfte, welche an sich leichter beherrschbar sind. Ein nicht unwichtiger Vorteil ergibt sich daraus, dass nicht nur beliebig kurze Arbeitshübe gefahren werden können. Der Kurzhub wird in der Schliessposition des Kurbeltriebes zumindest angenähert in der Totpunktlage angehalten. Dagegen kann er für die Offenposition ausserhalb der Totpunktlage an jeder beliebigen Stelle gestoppt werden, zur Verkürzung und Optimierung der Trockenlaufzeit. Für die Sicherstellung der grösstmöglichen Schliesskraft bzw. Schliessposition fährt der Kurbeltrieb zumindest angenähert immer in eine fest vorgewählte optimale Lage. Wechselnde Formdicken, z.B. temperaturbedingt, werden über Positionskorrekturen der düsenseitigen Werkzeugaufspannplatte eingestellt.

Gemäss einem zweiten Ausgestaltungsgedanken ist die Formschliesseinheit dadurch gekennzeichnet, dass sie für den Wartungshub einen elektromotorischen Säulenmutter-Antrieb aufweist, über welchen eine düsenseitige Werkzeugaufspannplatte für den Wartungshub relativ zur Antriebsträgerplatte bewegbar ist. Ganz besonders bevorzugt werden dabei die Säulen selbst antreibbar und die düsenseitige Werkezugaufpspannplatte mit den daran gelagerten Muttern bewegbar ausgestaltet. Damit wird die Antriebsträgerplatte in vollem Wortsinn, zu dem, was die Bezeichnung ausdrückt. Die entsprechende Endplatte wird zu einem Träger für die Antriebe, welche bevorzugt fest mit dem Maschinenständer verbunden wird. Dies bringt gleich mehrere Vorteile. Die statischen Kräfte lassen sich auf dem kürzesten Weg schliessen. Die hochdynamischen Kräfte werden von nur einer Seite umgeleitet bzw. gesteuert, nämlich nur von der Antriebsträgerplatte aus. Dadurch können mögliche Schwingvorgänge leichter unter Kontrolle gehalten bzw. kompensiert und ein zeitgleicher Eingriff, auch für Korrekturen, sichergestellt werden kann.

Der Drehantrieb aller Säulen erfolgt zentral bevorzugt über einen Zahnriemenantrieb oder über einen Zahnkranz. Ferner wird vorgeschlagen, dass der zentrale Säulenmutter-Antrieb als Stellglied der Schliesskraftregelung, zusammen mit einem bevorzugt an einem Maschinenteil angeordneten Kraftsensor, als Istwertgeber zur Erfassung der Schliesskraft und einer Regelvorrichtung ausgebildet wird. Die Wegerfassung der Hubbewegung erfolgt vorteilhafterweise durch eine Wegerfassung in den Servomotoren selbst. Diese, als reproduzierbare Wegepositionen, werden durch die Steuerung/Regelung bzw. Koordination der verschiedenen Achsen, z.B. auch für die Steuerung/Regelung und Synchronisierung der Betätigung von Entnahmegerät und Formschlussachse, genutzt. Die Steuer-/Regelvorrichtung wird als Zentralverstellung für den Wartungshub sowie den Arbeitshub ausgebildet, mit den erforderlichen Speichern für Rezepte bzw. Programme. Die Steuer-/Regelvorrichtung wird zur präzisen koordinierten Steuerung/Regelung der Servoachsen, sowohl für den Kurzhub wie für den Langhub, bzw. der Synchron- oder Asynchron-Motoren, mit entsprechenden Servoverstärkern ausgerüstet. Hierzu ist es wichtig, dass sie für den Arbeits- und für den Wartungshub wenigstens je einen unabhängig steuerbaren Antriebsmotor, vorzugsweise Servomotor, aufweist. Im Normalfall werden beide Antriebsseiten, sowohl für den Arbeitshub wie für den Wartungshub, elektromechanisch ausgebildet, wobei die Stossrichtung des Kurbelantriebes zumindest angenähert axial-symmetrisch innerhalb der Säulenachsen angeordnet wird. Die bewegliche Werkzeugaufspannplatte und die düsenseitige Werkzeugaufspannplatte werden auf einer gemeinsamen Führung geführt. Der Säulenmutter-Antrieb weist wenigstens drei, vorzugsweise vier angetriebene Säulen auf, wobei der Übertrieb für die drei bzw. vier Säulen auf der äusseren Endseite der Antriebsträgerplatte und der Übertrieb für den Kurbeltrieb auf der inneren Endseite der Antriebsträgerplatte angeordnet wird.

In Abwandlung zu den vorangehenden Ausgestaltungsmöglichkeiten können für ganz spezielle Einsätze die Formplatten, z.B. auch die Kurzhubträgerplatte und die Langhubträgerplatte, je als feste Formplatten oder als bewegliche Formplatten wählbar ausgebildet werden, wobei auch hier für den Langhub ein Mutterantrieb mit zentralem Achsentrieb für die Relativbewegung der Platten vorgesehen wird. Alle Bewegungsfunktionen sind primär relative Bewegungen der Bauteile zueinander und erst in zweiter Linie der Bauteile zu dem feststehenden Maschinenständer. Wird z.B. die Langhubträgerplatte am Maschinenständer fest verankert, so müssen die Bewegungsfunktionen der Einspritzseite entsprechend angepasst und koordiniert werden.

### Kurze Beschreibung der Erfindung

Die neue Lösung wird nun an Hand einiger Ausführungsbeispiele mit weiteren Einzelheiten erläutert. Es zeigen:
- Figur 1: eine Gesamtansicht einer Lösung des Standes der Technik, spezialisiert für die Herstellung von Compact Discs (CD);
- Figur 2: ein Beispiel für eine neue Lösung in perspektivischer Darstellung;
- Figur 3: die Hauptelemente eines Kurzhubantriebes als weiteres Ausführungsbeispiel;
- Figur 4: schematisch ein Schnitt gemäss Linie IV - IV der Figur 3 einer 3-Säulenmaschine;
- Figur 5a: den theoretischen Kraftverlauf am Ende der Schliessbewegung und beim Aufbau der Schliesskraft;
- Figur 5b: Funktion von Position und Drehwinkel für den Kurbeltrieb;
- Figur 6a: eine Ansicht der Figur 2 von der Rückseite gemäss Pfeil VI;
- Figur 6b: eine Ansicht von oben der Figur 6a gemäss Pfeil VI;
- Figur 7: ein Schnitt VII - VII der Figur 6b;
- Figur 8a: ein Kurbelgetriebe schematisch dargestellt;
- Figur 8b: eine Ansicht gemäss Pfeil IIX der Figur 8a;
- Figur 9: ein Schnitt IX - IX der Figur 6a;
- Figur 10: ein Beispiel für einen Zentralantrieb der Säulen über Zahnriemen;
- Figur 11: die Lagerung einer Säule;
- Figur 12: ein Beispiel einer Form mit zwei Kavitäten.

### Wege und Ausführung der Erfindung

Mit der neuen Lösung ist es gelungen, eine ganze Maschine für den Reinraumeinsatz zu konzipieren und z.B. die Vorteile, sowohl der mit Kniehebelsystem als auch der mit vollhydraulischer Formschliessung ausgerüsteten Maschinen, zu kombinieren. Ein wichtiger Vorteil der neuen Lösung liegt darin, dass die Trockenlaufzeit extrem kurz, z.B. kleiner als 0.3 Sekunden, ausgelegt werden kann. Zudem ist auch beim Wartungshub die Bewegung mit einer Genauigkeit im µ-Bereich gewährleistet (Bereich von Tausendstel Millimetern), so dass die Reproduzierbarkeit des einmal eingestellten Schliessbewegungsablaufes mit Einschluss des Schliesskraftverlaufes voll gewährleistet ist. Der Kurbeltrieb bzw. Exzenterantrieb hat auch den enormen Vorteil, dass der Arbeitshub beliebig klein, z.B. ohne weiteres mit ca. 25... 35 mm Kurbelradius, realisiert werden kann.

Mit der Lösung gemäss Figur 1 wird im bekannten Stand der Technik mit der von der Anmelderin unter dem Markennamen Discjet verkauften Maschine eine CD in 3,7 Sekunden oder weniger hergestellt. Die bekannte Lösung der Anmelderin ist eine vollhydraulische Maschine 10 mit sehr guten Eigenschaften in Bezug auf die Maschinenstabilität und weist drei Säulen auf. Der Kurzhub liegt bei 70 bis 80 mm, und die Schliesskraft ist bei etwa 600 kN. Der Wartungshub liegt bei etwa total 300 mm. Die Formplatte 1 ist fest mit einem Maschinenständer 8 verbunden. Zugstangen 2 sind verschraubt mit der Formplatte 1, wobei am anderen Ende der Zugstangen 2 ein Kolbenkopf 3 sich innerhalb eines Zylinders 4 befindet. Die Formplatte 5 ist in einer Produktionsstellung gezeichnet, wobei der Kolbenkopf 3 dauernd gegen eine Schulter der Zugstangen 2 drückt. Die aufgebrachte Kraft übersteigt die Schliesskraft. Mit relativ kleinen Kräften bewegt sich ein Schliesskolben über zwei Hilfszylinder vor und rückwärts über den ganzen Kurzhub. Nur für das Aufbringen der grossen Schliesskraft wird der entsprechende Oeldruck in einer Kolbenkammer aufgebracht. Für das Wechseln eines Stampers in der Form werden die drei Zylinder an den Zugstangen angesteuert, und die Formplatte 5 öffnet sich um den Wartungshub. Die Maschine 10 ist mit geöffneter Schutztüre 6 mit Sicht auf den Formschluss und den Einspritzzylinder 7, dargestellt. Das Rohmaterial wird über Füllbehälter 9 zugeführt.

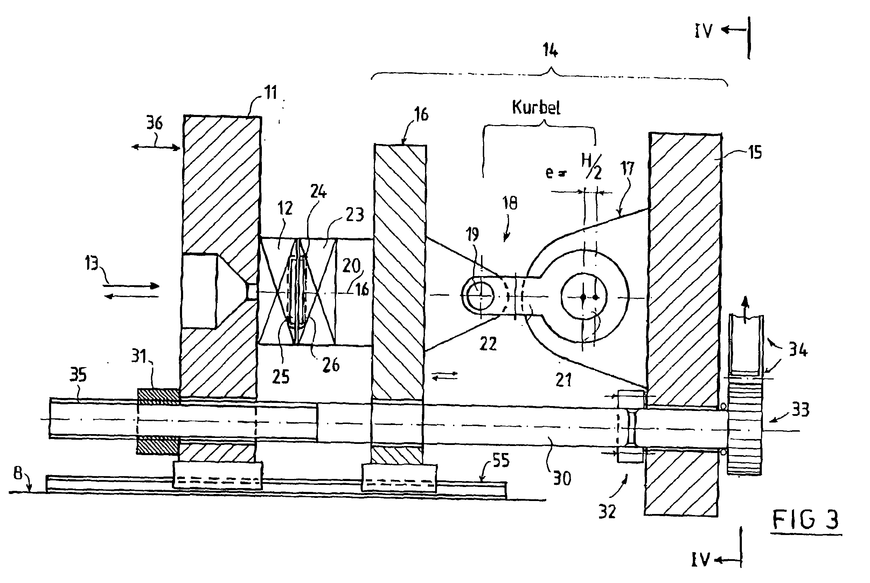

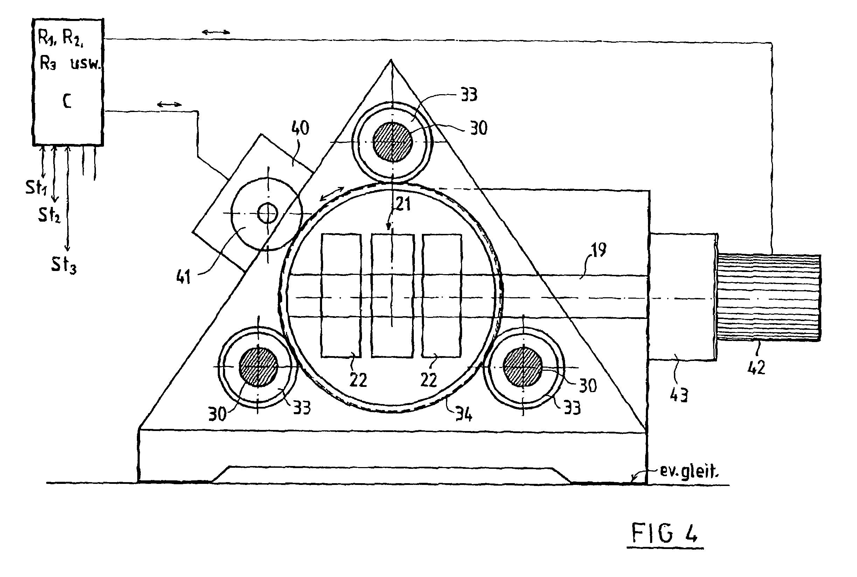

Die Figur 2 zeigt ein Beispiel der neuen Lösung perspektivisch dargestellt mit vier über Zahnriemen angetriebenen Säulen. Die Figuren 3 und 4 zeigen ein weiteres Beispiel der neuen Lösung mit drei Säulen. Auf der linken Bildseite ist die düsenseitige Werkzeugaufspannplatte bzw. Langhubträgerplatte 11 mit einer Formhälfte 12, auf die hin, gemäss Pfeilen 13, die Einspritzdüse 7 zu- und wegbewegt wird. Die Langhubträgerplatte 11 kann je nach gewähltem Konzept fest oder beweglich an dem Maschinenständer 8 angeordnet werden. Auf der rechten Bildseite befindet sich z.B. als eine kompakte Baueinheit 14 ein Kurbelantrieb. Die Baueinheit 14 besteht aus einer Antriebsträgerplatte 15 und einer beweglichen Werkzeugaufpsannplatte 16, die auf einer Führung 55 auf dem Maschinenbett 8 aufliegt, sowie einer Kurbelträgerkonstruktion 17. Ein Kurbeltrieb 18 ist einerseits über einen Bolzen 19 in der beweglichen Werkzeugaufspannplatte 16 und anderseits über einen Exzenter 21 in der Kurbeltragkonstruktion 17 gelenkig gelagert, derart, dass die Kurbel 22, entsprechend der Exzentrizität e, die Kurbelbewegung durchführen kann. Die Exzentrizität e entspricht der halben Hubhöhe (H/2). Am gegenüberliegenden Ende der beweglichen Werkzeugaufspannplatte 16 befindet sich eine Formhälfte 23. Mit den beiden Formhälften 12 sowie 23 entsteht in geschlossenem Zustand der Hohlraum 24 für die Einlage des gewünschten scheibenförmigen Teiles. Üblicherweise wird jedoch die CD nicht direkt in den Hohlraum 24 gegossen. In dem Hohlraum wird ein- oder beidseitig je ein Stamper 25, 26 eingelegt, welche die Negativform für die CD aufweisen.

Die Relativbewegung der Formhälfte 12 zu der Trägerplatte 15 entspricht grundsätzlich dem Stand der Technik. Die Verankerungs- und Haltekraft zwischen den beiden Platten wird durch drei (Figur 4) oder gegebenenfalls vier Säulen 30, gemäss Figur 2, sichergestellt. Jede Säule 30 ist auf der düsenseitigen Werkzeugaufspannplatte 11 über eine Mutter 31 verankert. An der Antriebsträgerplatte 15 ist ein drehbeweglicher Bund 32 befestigt, welcher über einen Zahnkranz 33 in einen Zahnreifen 34 eingreift (Figur 4). Die feste Mutter 31 greift über ein Innengewinde auf den Gewindelauf 35 jeder Säule ein. Eine Drehbewegung der Zahnkranzes oder des Zahnriemens wird durch die Drehung der Säulen auf die Mutter 31 und den Gewindeverlauf 35 der Säulen in eine Linearbewegung (Pfeile 36) der düsenseitigen Werkzeugaufspannplatte 11 umgesetzt. Diese Bewegung stellt den Lang- oder Wartungshub dar und wird primär beim Stamperschnellwechsel benötigt. Der kurze Arbeitshub wird dagegen über den Kurbeltrieb 18 sowie der beweglichen Werkzeugaufspannplatte 16 durchgeführt. Die Figur 4 zeigt schematisch den An- bzw. Übertrieb für die Säulenmuttern bzw. dem Langhub mit einem Elektromotor 40 mit Antriebsritzel 41 sowie den Antrieb für den Kurzhub über einen Elektromotor 42, ein Getriebe 43 sowie den Exzenter 21. Die Einspritzeinheit mit Plastifizierzylinder sind der düsenseitigen Werkzeugaufspannplatte 11 und beide elektromotorischen Antriebe der anderen, festen Trägerplatte zugeordnet. Der Wartungshub wird mit einer an sich bekannten "Formbauhöhenverstellung" mittels Radkranz und Zahnrädern an den Säulenmuttern gefahren. Als Alternative kann die Drehung der Säulen mit einem Zahnriemen realisiert werden. Mit der Lagerung der Säulen mit Wälzlagern in den Formplatten und Schmierung der Lager und der Verstellgewinde lassen sich höhere Verstellgeschwindigkeiten und damit Umrüstungszeiten beim Wechsel der Matrize (Stamper) von kleiner als 30 Sekunden erreichen. Neu wird deshalb auch für diesen Antrieb ein genau positionierbarer Elektromotor, vorzugsweise ein Servomotor mit spielarmem Getriebe, eingesetzt. Zwischen Kurbeltrieb und elektrischem Antriebsmotor befindet sich ein Getriebe, vorzugsweise ein Stirnradgetriebe. Mit C ist eine Steuer-/Regelintelligenz mit Speicher angedeutet, welche der entsprechenden Motorsteuerung/Regelung die jeweils erforderlichen Programmabläufe bzw. Rezepte vorgibt. Im Kasten C ist mit R1, R2, R3 usw, angedeutet, dass beliebige Rechenleistungen direkt vorort installiert und entsprechende Koordinationen direkt durchgeführt werden können. Sinngemäss können die Steuerverbindungen St1, St2, St3 vorgesehen und eine entsprechende Optimierung aller Steuer- und Regelabläufe sichergestellt werden.

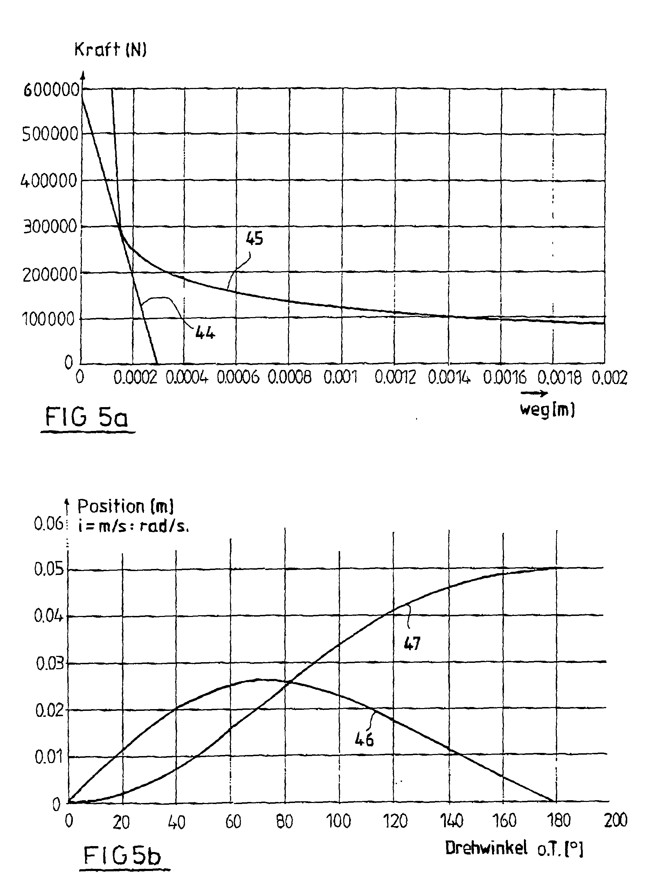

In der Figur 5a ist mit der ausgezogener Linie 45 der theoretische Kraftverlauf am Ende der Schliessbewegung dargestellt. Die dicke Linie 44 zeigt den effektiven Kraftverlauf auf beide Formhälften auf Grund der hook'schen Kennlinien der Verformung der Säulen sowie der Platten, bei einer CD-Schliesseinheit mit 50mm Öffnungsweg. In Figur 5b zeigt die untere Linie 46 den Geschwindigkeitsverlauf und die Kurve 47 den Verlauf der Exzenterbewegung für einen CD-Formschluss.

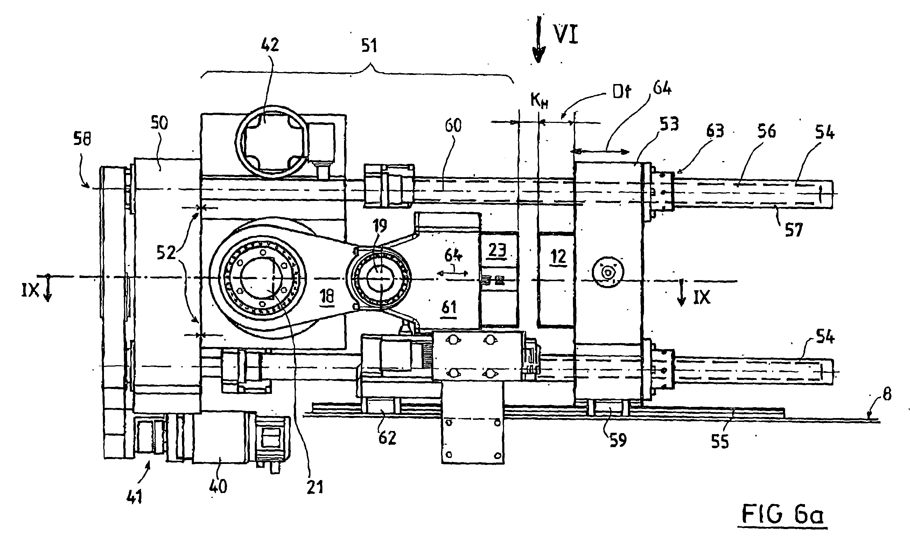

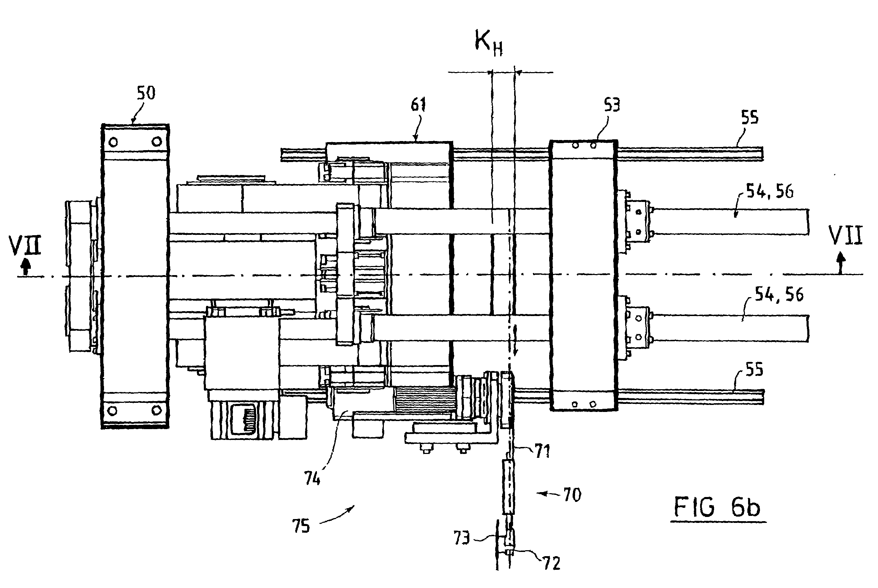

In der Folge wird auf die Figuren 6a und 6b Bezug genommen, welche eine Ansicht von der Seite bzw. von oben darstellen (Figur 6b). Auf der linken Bildseite ist eine Antriebsträgerplatte 50, an welcher sich nach rechts eine Baugruppe 51 für den Arbeits- bzw. Kurzhub direkt über Verbindungsmittel 52 fest angeschraubt ist. Auf der rechten Bildhälfte ist eine düsenseitige Werkzeugaufspannplatte 53 angeordnet. Die düsenseitige Werkzeugaufspannplatte ist einerseits über vier Säulen 54 gegenüber der Antriebsträgerplatte 50 gehalten und nach unten auf einer Führung 55 geführt. Jede der vier Säulen 54 ist über eine Säulenmutter 63 in der düsenseitigen Werkzeugaufspannplatte 53 gelagert, derart, dass eine Drehbewegung der Säulenachse 56 eine Längsverschiebung die Formhälfte 12 ergibt. Damit die Säulenachse 56 mit den hochpräzisen und für möglichst grosse Reibungsarmut gut geschmierten Gewinde nicht verschmutzt wird, ist über die Säulenachse 56 mit einer Schutzhülse 57 umgeben. Die Drehbewegung der Säulenachsen 56 wird über einen Zahnriemenantrieb 58 sowie einen Antriebsmotor bzw. Elektromotor 40 zentral erzeugt. Die düsenseitige Werkzeugaufspannplatte 53 ist beidseits über Gleitblöcke 59 für eine reine Linearbewegung parallel zu der Achse 60 der Säulenachsen 56 nahezu spielfrei geführt. Sinngemäss ist auch die bewegliche Werkzeugaufspannplatte 61 über Gleitblöcke 62 für eine exakte Parallelführung abgestützt. Der Exzenter 21 ist frei gelagert, so dass die Kurbelbewegung des Kurbeltriebes 18 unbehindert in die Linearbewegung umsetzbar ist. Durch das Verfahren der düsenseitigen Werkzeugaufspannplatte 53 mittels entsprechendem Drehimpuls an dem Elektromotor 42 wird die Form weit, z.B. auf eine freie Öffnung von 300 mm, geöffnet. Die entsprechende Bewegung ist mit Pfeil 64 angedeutet. An der Form 12 ist mit Dt eine Dickentoleranz, z.B. infolge Temperaturänderung des ganzen Formkörpers, bezeichnet. Eine dadurch erforderliche Korrektur wird von der Steuerung selbständig erkannt (Veränderung der Schliesskraft) und die Positionskorrektur über den Elektromotor 40 durchgeführt. Der eigentliche Kurzhub KH wird allein durch die Exzenterbewegung über den Kurbeltrieb 18 und der zwangsweisen horizontalen Linearbewegung der beweglichen Werkzeugaufspannplatte 61 sichergestellt. Eine weitere zentrale Funktion in der Produktion ist die CD-Entnahme. In der Figur 6b ist ein Entnahmeroboter 70 mit Roboterarm 71, einem Saughaltekopf 72 sowie eine daran gehaltene CD 73 dargestellt. Der Entnahmeroboter 70 hat einen eigenen Antriebsmotor 74 und ist als Entnahmeeinheit 75 fest mit dem Maschinenbett verbunden. Wichtig ist dabei eine völlige Koordinierung des Bewegungsablaufes des Roboterarmes 71 und der Kurzhubbewegung für die Formöffnung. Die Koordination erfolgt im Millisekundenbereich und ist durch geeignete Sensoren gesichert, damit unter keinen Umständen eine Kollision der bewegten Teile eintritt.

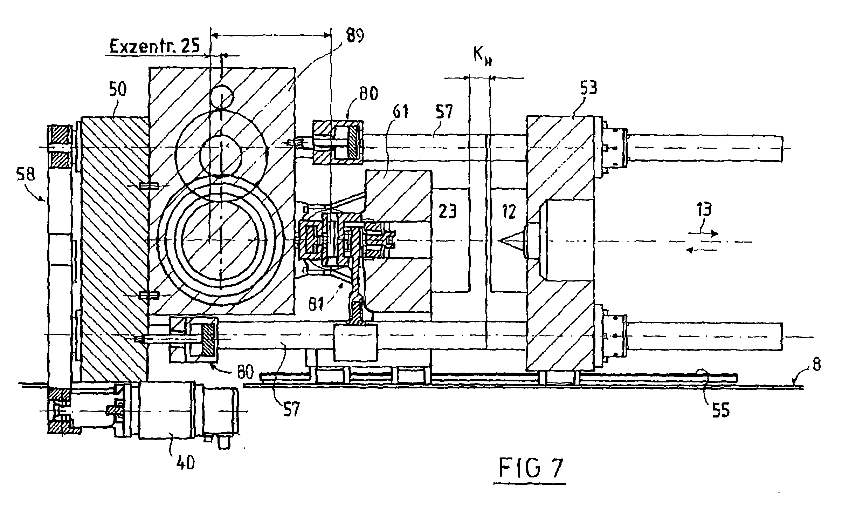

Die Figur 7 zeigt einen Schnitt VII - VII der Figur 6b. Wie weiter oben ausgeführt ist, wird der zentrale Säulenmutter-Antrieb bevorzugt als Stellglied der Schliesskraftregelung, zusammen mit einem Kraftsensor als istwertgeber zur Erfassung der Schliesskraft, und einer Regelvorrichtung genutzt. Dabei erfolgt die Wegerfassung der Hubbewegungen durch eine Wegerfassung im Servomotor selbst. Die reproduzierbaren Positionen werden der Steuerung/Regelung bzw. Koordination der verschiedenen Achsen zu Grunde gelegt. Um die erforderliche Genauigkeit nach einer Verstellung des Wartungshubes gewährleisten zu können, wird durch eine Vorspanneinrichtung 80 in jeder der angetriebenen Säulen das maschinenbaulich erforderliche Lager- und Gewindespiel aufgehoben. Die erforderliche Anpressung zur Spielaufhebung kann über Federn oder pneumatisch erfolgen und bewirkt mittels einer Vorspannkraft zwischen der Abstützplatte 15 und der Formplatte 11, dass das Spiel an der kraftschlüssigen Flanke aufgehoben wird. Mit Exzenter 25 ist nur als Beispiel der Exzenterradius mit 25 mm bezeichnet, was einen totalen kurzen KH von 50 mm erlauben würde. Auf die Ausstossvorrichtung 81 wird nicht näher eingegangen. Diese kann z.B. mit pneumatischer Betätigung ausgebildet sein und den Lösungen des Standes der Technik entsprechen.

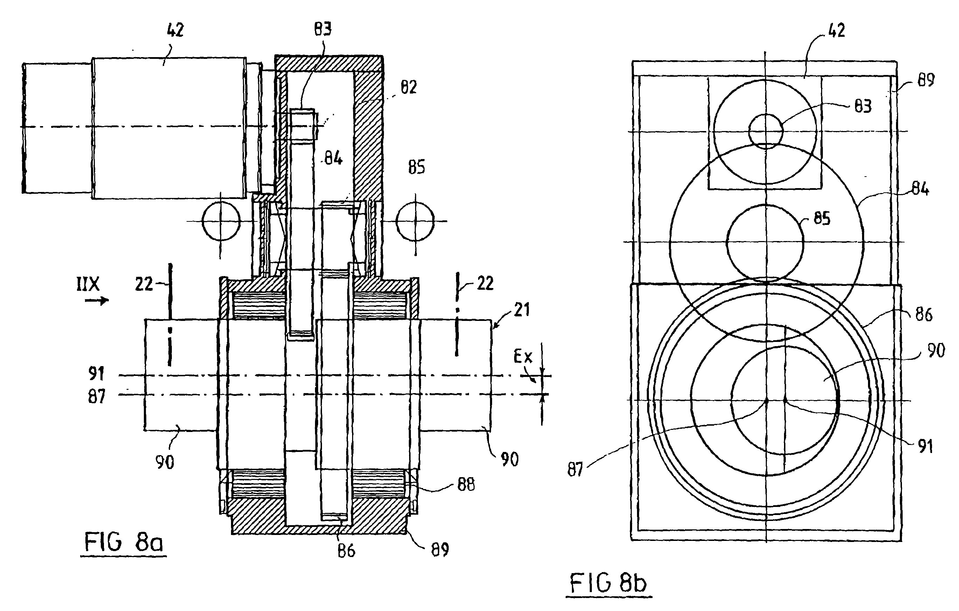

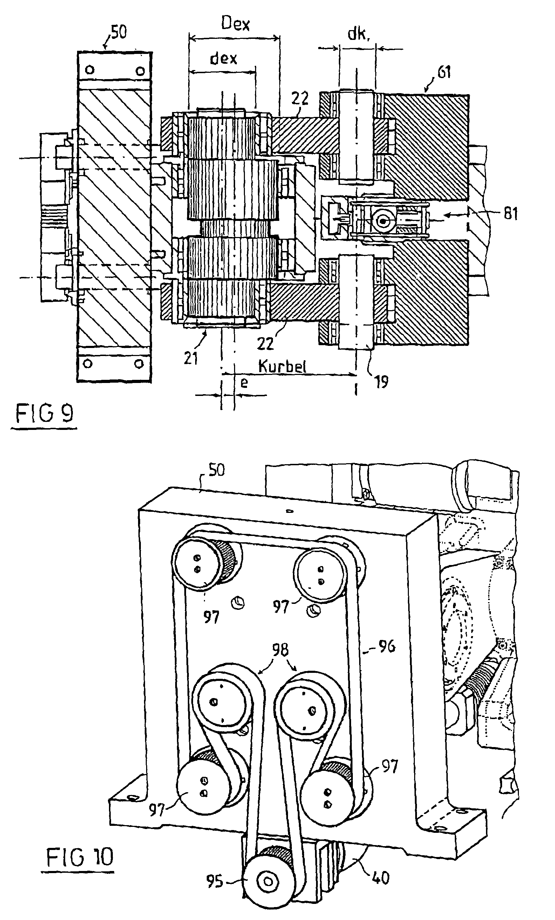

Die Figuren 8a und 8b zeigen schematisch den Exzenterantrieb. Der Elektromotor als Servomotor 42 ist oben angeordnet und überträgt mit seiner Abgangswelle 82 sowie einem Ritzel 83 die Bewegung des Rotores von Servomotor 42 auf ein Übertriebszahnrad 84 und über ein weiteres Ritzel 85 auf das Antriebszahnrad 86, welches fest auf der Exzenterwelle 21 aufgebracht ist. Dabei wird die Exzenterwelle 21 um die Achse 87 des Antriebszahnrades 86 zwangsangetrieben. Die Exzenterwelle 21 ist über die beiden Rollenlager 88 in dem Lagerblock 89. Auf beiden Seiten kragt je ein Lagerzapfen 90 mit Drehachse 91 aus. Aus dem Lagerzapfen 90 sind die beiden Kurbelarme 22 gelagert (Figur 9) und erzeugen entsprechend der Exzentrizität Ex eine Kurbelbewegung für die bewegliche Werkzeugaufspannplatte.

Die Figur 9 zeigt etwas mehr gegenständlich einen Horizontalschnitt IX - IX der Figuren 6a. Daraus ist ersichtlich, dass der Exzenter 21 frei gelagert ist in Bezug auf die Antriebsträgerplatte 50. Die Kurbel 22 ist doppelt ausgeführt und lässt dazwischen einen Freiraum für die ganze Ausstossmechanik 81. Sie überträgt gleichmässig bzw. symmetrisch die Schliesskraft auf die bewegliche Werkzeugaufspannplatte 61.

Die Figuren 8, 9 und 10 zeigen je eine besonders vorteilhafte Ausgestaltung der Übertriebsmittel. Unter Übertrieb werden die getriebetechnischen Mittel zwischen dem Antriebsmotor und den zu bewegenden Arbeitsteilen verstanden. Für den Übertrieb können verschiedenste Mittel und Übersetzungsverhältnisse zur Optimierung der Antriebstechnik gewählt werden. Die gezeigten Lösungen sind nur Beispiele.

Die Figur 10 zeigt einen Ausschnitt einer perspektivischen Darstellung von der äusseren Antriebsseite der Antriebsträgerplatte 50 für die zentralen Säulenmutterverstellung. Diese wird angetrieben durch einen Elektro- bzw. Servomotor 40, an dem ein Zahnriemenrad 95 mit darumlaufendem Zahnriemen 96 angeordnet ist. Der Zahnriemen 96 umschlingt sowohl die vier Riemenübertriebsräder 97 wie auch zwei Riemenspannräder 98. Damit wird ein spielfreier und präziser Antrieb der vier Säulen gewährleistet.

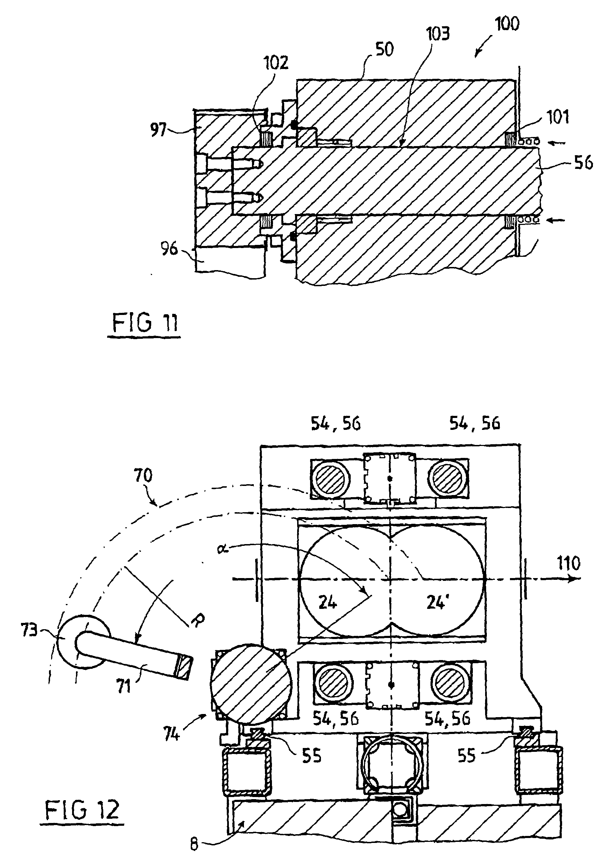

Die Figur 11 zeigt einen Schnitt durch eine Lagerstelle 100 einer Säulenachse 56. An den beiden äusseren Seiten ist je eine Dichtung 101 bzw. 102 angebracht. Dies gestattet, im Inneren der Lagerung eine Fettschmierung einzuschliessen, so dass auch hier die Forderung einer langen Lebensdauer sowie des Reinraumeinsatzes sichergestellt ist.

Die Figur 12 zeigt vereinfacht eine Zweikavitätenform mit entsprechend zwei Hohlräumen 24, 24' für das gleichzeitige Herstellen von zwei CD's. Durch entsprechende Gestaltung des Entnahmeroboters mit Radius R können zwei oder selbst mehr Kavitäten vorgesehen werden und gegebenenfalls eine Entnahme auf beiden Seiten erfolgen (Pfeil 110). Der Drehwinkel a richtet sich nach den speziellen Gegebenheiten.

## Patentansprüche

1. Formschliesseinheit für eine Spritzgiessmaschine mit einem kurzen Arbeitshub sowie einem längeren Wartungshub, insbesondere für die Herstellung von scheibenförmigen Teilen,
**dadurch gekennzeichnet,**
**dass** sie eine Antriebsträgerplatte (15) mit wenigstens einer elektromotorischen Servoachse aufweist, wobei die Antriebsträgerplatte (15) ortsfest endseitig mit dem Maschinenständer (8) der Spritzgiessmaschine verbindbar oder relativ zu der düsenseitigen Werkzeugaufspannplatte bewegbar ist.

2. Formschliesseinheit nach Anspruch 1,
**dadurch gekennzeichnet,**
**dass** sie für den Kurzhub ein elektromotorisches Kurbelgetriebe (18) mit vorzugsweise einem Servomotor aufweist, über welchen eine bewegliche Werkzeugaufspannplatte (16, 61) für den Arbeitshub schnell geöffnet und schliessbar ist.

3. Formschliesseinheit nach einem der Ansprüche 1 oder 2,
**dadurch gekennzeichnet,**
**dass** das Kurbelgetriebe (18) eine Exzenterwelle sowie vorzugsweise zwei parallel angeordnete Kurbelhebel (22) aufweist, welche von einem Synchron- oder AsynchronMotor antreibbar sind und symmetrisch an der beweglichen Werkzeugaufspannplatte (16, 61) angreifen.

4. Formschliesseinheit nach einem der Ansprüche 1 bis 3,
**dadurch gekennzeichnet,**
**dass** der Kurzhub in der Schliessposition des Kurbeltriebes (18) zumindest angenähert in der Totpunktlage und für die Offenposition der Kurbeltrieb (18) ausserhalb der Totpunktlage hält, zur Optimierung bzw. Verkürzung der Trockenlaufzeit.

5. Formschliesseinheit nach einem der Ansprüche 1 bis 4,
**dadurch gekennzeichnet,**
**dass** der Kurbelantrieb (18) eine fest vorgegebene optimale Kurbelposition für die Schliesslage aufweist und wechselnde Formdicken über Positionskorrekturen einer düsenseitigen Werkzeugaufspannplatte (16, 61) eingestellt werden.

6. Formschliesseinheit nach einem der Ansprüch e 1 bis 5,
**dadurch gekennzeichnet,**
**dass** sie für den Wartungshub einen elektromotorischen Säulenmutter-Antrieb (96, 97, 98) aufweist, über welchen eine düsenseitige Werkzeugaufspannplatte (53) für den Wartungshub bewegbar ist.

7. Formschliesseinheit nach Anspruch 6,
**dadurch gekennzeichnet,**
**dass** die Säulen (30, 54) antreibbar sind und die düsenseitige Werkzeugaufspannplatte (53) über die daran gelagerten Muttern (31) bewegen, wobei jeder Säule (30, 541 bevorzugt eine Vorspannungseinrichtung (80) zur Aufhebung des Axialspiels zugeordnet wird.

8. Formschliesseinheit nach einem der Ansprüche 1 bis 7,
**dadurch gekennzeichnet,**
**dass** der Drehantrieb der Säulen (30, 54) über einen Zahnriemenantrieb (96) oder über einen Zahnkranz (33) erfolgt.

9. Formschliesseinheit nach einem der Ansprüche 6 bis 8,
**dadurch gekennzeichnet,**
**dass** zur Reduzierung der Reibung die Lagerung der Säulen (30, 54) über Wälzlager mit Schmierung erfolgt.

10. Formschliesseinheit nach einem der Ansprüche 1 bis 9,
**dadurch gekennzeichnet,**
**dass** der zentrale Säulenmutter-Antrieb als Stellglied der Schliesskraftregelung, zusammen mit einem Kraftsensor als Istwertgeber zur Erfassung der Schliesskraft und einer Regelvorrichtung ausgebildet ist und die Wegerfassung der Hubbewegungen vorzugsweise durch eine Wegerfassung im Servomtor erfolgt, wobei die entsprechenden als reproduzierbare Position der Steuerung/Regelung bzw. Koordination der verschiedenen Achsen zu Grunde gelegt wird.

11. Formschliesseinheit nach einem der Ansprüche 1 bis 10,
**dadurch gekennzeichnet,**
**dass** sie für den Arbeits- und für den Wartungshub wenigstens je einen unabhängig steuerbaren Antriebsmotor, vorzugsweise als Servomotor ausgebildet, aufweist, wobei die Steuer-/Regelvorrichtung als Zentralverstellung für den Wartungshub sowie den Arbeitshub ausgebildet ist, mit den erforderlichen Speichern für Rezepte bzw. Programme.

12. Formschliesseinheit nach einem der Ansprüche 1 bis 11,
**dadurch gekennzeichnet,**
**dass** sie eine Steuer-/Regelvorrichtung aufweist zur präzisen koordinierten Steuerung/Regelung der Servoachsen, sowohl für den Kurzhub wie für den Langhub, wobei die Servoachsen mit Synchron- oder Asynchron-Motoren mit entsprechenden Servoverstärkern ausgerüstet sind.

13. Formschliesseinheit nach einem der Ansprüche 1 bis 12,
**dadurch gekennzeichnet,**
**dass** beide Antriebseinheiten (40, 42) sowohl für den Arbeitshub wie für den Wartungshub, elektromechanisch ausgebildet sind, wobei die Stossrichtung des Kurbelantriebes (18) zumindest angenähert axialsymmetrisch innerhalb der Säulenachsen (56) angeordnet ist.

14. Formschliesseinheit nach einem der Ansprüche 1 bis 13,
**dadurch gekennzeichnet,**
**dass** die bewegliche Werkzeugaufspannplatte (61) und die düsenseitige Werkzeugaufspannplatte (53) auf einer gemeinsamen Führung auf dem Maschinenbett geführt sind.

15. Formschliesseinheit nach einem der Ansprüche 1 bis 14,
**dadurch gekennzeichnet,**
**dass** der Säulenmutterantrieb (96, 97, 98) wenigstens drei, vorzugsweise vier angetriebene Säulen (30, 54) aufweist, wobei der Übertrieb für die drei bzw, vier Säulen auf der äusseren Endseite der Antriebsträgerplatte (15) und der Übertrieb für den Kurbeltrieb (18) auf der inneren Endseite der Antriebsträgerplatte (15) angeorndet ist.

16. Formschliesseinheit nach einem der Ansprüche 1 bis 15,
**dadurch gekennzeichnet,**
**dass** die Formplatten je als feste Formplatten oder als bewegliche Formplatten wählbar sind, wobei für den Langhub ein Mutterantrieb mit zentralem Achsentrieb für die Relativbewegung der Platten vorgesehen ist.

17. Formschliesseinheit nach einem der Ansprüche 1 bis 16,
**dadurch gekennzeichnet,**
**dass** die Steuerung/Regelung ausgelegt ist zur synchronen Betätigung des Entnahmegerät sowie der Formschlussachse.

## Claims

1. Mould closing unit for an injection moulding machine with a short working stroke and a longer maintenance stroke, in particular for producing disc-like parts, **characterised in that** it comprises a drive carrier plate (15) with at least one electromotive servo shaft, wherein the drive carrier plate (15) can be stationarily connected at its end to the machine tool table (8) of the injection moulding machine or can be moved relative to the platen on the fixed mould half.

2. Mould closing unit according to claim 1, **characterised in that** for the short stroke it has an electromotive crank mechanism (18), preferably with a servomotor, via which a moving platen (16, 61) is opened and closed quickly for the working stroke.

3. Mould closing unit according to either of claims 1 or 2, **characterised in that** the crank mechanism (18) has an eccentric shaft and preferably two parallel crank levers (22) which can be driven by a synchronous or asynchronous motor and act symmetrically on the moving platen (16, 61).

4. Mould closing unit according to any of claims 1 to 3, **characterised in that** in the closed position of the crank mechanism (18) the short stroke stops at least approximately in the dead centre position and in the open position of the crank mechanism (18) stops outside of the dead centre position to optimise or reduce the dry cycle time.

5. Mould closing unit according to any of claims 1 to 4, **characterised in that** the crank mechanism (18) has a strictly predetermined optimum crank position for the closed state, and changing mould thicknesses are adjusted via position corrections of a platen (16, 61) on the fixed mould half.

6. Mould closing unit according to any of claims 1 to 5, **characterised in that** it has an electromotive pillar-nut drive (96, 97, 98) for the maintenance stroke, via which a platen (53) on the fixed mould half can be moved for the maintenance stroke.

7. Mould closing unit according to claim 6, **characterised in that** the pillars (30, 54) can be driven and move the platen (53) on the fixed mould half via the nuts (31) mounted thereon, a biasing device (80) for eliminating the axial play preferably being associated with each pillar (30, 54).

8. Mould closing unit according to any of claims 1 to 7, **characterised in that** the rotary drive of the pillars (30, 54) takes place via a toothed belt drive (96) or a toothed ring (33).

9. Mould closing unit according to any of claims 6 to 8, **characterised in that** to reduce friction, the pillars (30, 54) are mounted via rolling bearings with lubrication.

10. Mould closing unit according to any of claims 1 to 9, **characterised in that** the central pillar-nut drive is designed as an actuator of the closing force controller, together with a force sensor as an actual value sensor for detecting the closing force and a control system, and the position of the stroke movements is preferably detected by a position detection means in the servomotor, the corresponding stroke movements being used as a reproducible position for the control or coordination of the various shafts.

11. Mould closing unit according to any of claims 1 to 10, **characterised in that** for the working and maintenance stroke it comprises at least one respective, independently controllable drive motor, preferably designed as a servomotor, the control system being designed as a central adjustment means for the maintenance stroke and the working stroke with the memories required for formulations and programmes.

12. Mould closing unit according to any of claims 1 to 11, **characterised in that** it comprises a control system for precise, coordinated control of the servo shafts, both for the short stroke and for the long stroke, the servo shafts being equipped with synchronous or asynchronous motors with corresponding servo amplifiers.

13. Mould closing unit according to any of claims 1 to 12, **characterised in that** the two drive units (40, 42) are designed electromechanically both for the working stroke and for the maintenance stroke, the direction of impact of the crank mechanism (18) being arranged at least approximately axisymmetrically within the pillar shafts (56).

14. Mould closing unit according to any of claims 1 to 13, **characterised in that** the moving platen (61) and the platen (53) on the fixed mould half are guided on a common guide means on the machine base.

15. Mould closing unit according to any of claims 1 to 14, **characterised in that** the pillar nut drive (96, 97, 98) has at least three, preferably four, driven pillars (30, 54), the overdrive for the three or four pillars being arranged on the outer end face of the drive carrier plate (15) and the overdrive for the crank mechanism (18) being arranged on the inner end face of the drive carrier plate (15).

16. Mould closing unit according to any of claims 1 to 15, **characterised in that** the mould plates can each be selected as a fixed plate or as moving plate, a nut drive with central axial drive being provided for the long stroke for the relative movement of the plates.

17. Mould closing unit according to any of claims 1 to 16, **characterised in that** the control means is designed for synchronous actuation of the removal device and the mould closing shaft.

## Revendications

1. Unité de fermeture de moule pour une presse à injection, comportant une course de travail brève et une course de service plus longue, en particulier pour la fabrication de pièces en forme de disque, **caractérisée en ce qu'**elle présente une plaque de support de commande (15) avec au moins un servoaxe électromoteur, la plaque de support de commande (15) pouvant être assemblée, de manière fixe du côté des extrémités, avec le montant (8) de la presse à injection ou pouvant être déplacée par rapport à la plaque de fixation d'outil du côté de la buse.

2. Unité de fermeture de moule selon la revendication 1, **caractérisée en ce que**, pour la course de travail brève, elle présente un mécanisme bielle-manivelle électromoteur (18) avec de préférence un servomoteur par l'intermédiaire duquel une plaque de fixation mobile d'outil (16, 61) est ouverte et refermable rapidement pour la course de travail.

3. Unité de fermeture de moule selon la revendication 1 ou 2, **caractérisée en ce que**, le mécanisme bielle-manivelle (18) présente un arbre à excentrique et de préférence deux leviers de manivelle (22) qui sont disposés en parallèle, peuvent être actionnés par un moteur synchrone ou asynchrone et sont appliqués de façon symétrique contre la plaque de fixation mobile d'outil (16, 61).

4. Unité de fermeture de moule selon l'une quelconque des revendications 1 à 3, **caractérisée en ce que**, pour la position de fermeture du mécanisme bielle-manivelle (18), la course de travail brève s'arrête à la position du point de mort au moins de façon approchée et, **en ce que**, pour la position d'ouverture du mécanisme bielle-manivelle (18), elle s'arrête en dehors de la position du point mort, en vue de l'optimisation et de la réduction du temps de fonctionnement à sec.

5. Unité de fermeture de moule selon l'une quelconque des revendications 1 à 4, **caractérisée en ce que**, le mécanisme bielle-manivelle (18) présente une position de manivelle optimale prédéfinie de manière fixe pour la position de fermeture et, **en ce que** des épaisseurs de moule variables sont ajustées par les corrections de position d'une plaque de fixation d'outil (16, 61) du côté de la buse.

6. Unité de fermeture de moule selon l'une quelconque des revendications 1 à 5, **caractérisée en ce que**, pour la course de service, elle présente un entraînement électromoteur (96, 97, 98) des écrous des colonnes grâce auquel une plaque de fixation d'outil (53) du côté de la buse peut être déplacée pour la course de service.

7. Unité de fermeture de moule selon la revendication 6, **caractérisée en ce que** les colonnes (30, 54) peuvent être entraînées et déplacent la plaque de fixation d'outil (53) du côté de la buse par l'intermédiaire des écrous (31) montés sur ladite plaque, un dispositif de précontrainte (80) qui permet d'annuler le jeu axial, étant affecté de préférence à chaque colonne (30, 54).

8. Unité de fermeture de moule selon l'une quelconque des revendications 1 à 7, **caractérisée en ce que** l'entraînement à rotation des colonnes (30,54) est réalisé sous la forme d'un entraînement à courroie dentée (96) ou à l'aide d'une couronne dentée (33).

9. Unité de fermeture de moule selon l'une quelconque des revendications 6 à 8, **caractérisée en ce que**, pour réduire le frottement, le montage des colonnes (30, 54) sur un palier à roulement est réalisé avec lubrification.

10. Unité de fermeture de moule selon l'une quelconque des revendications 1 à 9, **caractérisée en ce que** l'entraînement central des écrous des colonnes est conçu comme un organe de réglage de la force de fermeture avec un capteur de force sous forme de capteur en temps réel destiné à enregistrer la force de fermeture et avec un dispositif de réglage, **en ce que** l'enregistrement du déplacement des courses se fait de préférence par un enregistrement du déplacement dans le servomoteur, la position correspondante servant de base comme position reproductible de la commande/du réglage et de la coordination des différents axes.

11. Unité de fermeture de moule selon l'une quelconque des revendications 1 à 10, **caractérisée en ce que**, pour la course de travail et de service, elle présente à chaque fois au moins un moteur d'entraînement actionnable de manière indépendante, conçu de préférence comme servomoteur, le dispositif de commande/de réglage étant réalisé comme réglage central pour la course de service ainsi que pour la course de travail, avec les mémoires nécessaires pour des formules et des programmes.

12. Unité de fermeture de moule selon l'une quelconque des revendications 1 à 11, **caractérisée en ce qu'**elle présente un dispositif de commande/de réglage pour la commande/le réglage coordonné et précis des servoaxes aussi bien pour la course brève que pour la course longue, les servoaxes étant équipés de moteurs synchrones ou asynchrones avec des servoamplificateurs correspondants.

13. Unité de fermeture de moule selon l'une quelconque des revendications 1 à 12, **caractérisée en ce que** les deux unités d'entraînement (40, 42) sont conçues sous une forme électromécanique aussi bien pour la course de travail que pour la course de service, le sens de poussée du mécanisme bielle-manivelle (18) étant axisymétrique, au moins de façon approchée, à l'intérieur des axes de colonnes (56).

14. Unité de fermeture de moule selon l'une quelconque des revendications 1 à 13, **caractérisée en ce que** la plaque de fixation mobile d'outil (61) et la plaque de fixation d'outil (53) du côté de la buse sont guidées sur une glissière de guidage commune sur le socle de la machine.

15. Unité de fermeture de moule selon l'une quelconque des revendications 1 à 14, **caractérisée en ce que** l'entraînement des écrous des colonnes (96, 97, 98) présente au moins trois colonnes (30, 54) entraînées, de préférence quatre, la commande supérieure pour les trois ou quatre colonnes étant disposée sur l'extrémité extérieure de la plaque de support de commande (15) et la commande supérieure pour le mécanisme bielle-manivelle (18) étant disposée sur l'extrémit intérieure de la plaque de support de commande (15).

16. Unité de fermeture de moule selon l'une quelconque des revendications 1 à 15, **caractérisée en ce que** les plateaux de moule peuvent être choisis comme plateaux de moule fixes ou comme plateaux de moule mobiles, un entraînement des écrous étant prévu pour la longue course avec un entraînement central des axes pour le déplacement relatif des plateaux.

17. Unité de fermeture de moule selon l'une quelconque des revendications 1 à 16, **caractérisée en ce que** la commande/le réglage est conçu pour l'actionnement synchrone de l'appareil de prélèvement et de l'axe de fermeture du moule.
